# EUROPEAN PATENT SPECIFICATION

(11) **EP 2 710 774 B1**
(45) Date of publication and mention of the grant of the patent: **04.03.2015**
(21) Application number: 12726212.9
(22) Date of filing: 10.05.2012
(51) Int. Cl.: H04L 27/26, H04W 88/08

(54) **Distributed base station with robust packet interface**
Verteilte Basisstation mit robuster Paketschnittstelle
Station de base distribuée avec interface de paquets robuste

(30) Priority: 17.05.2011 US 201113109421
(43) Date of publication of application: 26.03.2014
(73) Proprietor: Telefonaktiebolaget L M Ericsson (publ), 164 83 Stockholm (SE)
(72) Inventor: COMEAU, Adrien, Joseph, Ottawa K0A 2TO (CA)
(74) Representative: Röthinger, Rainer
(86) International application number: PCT/IB2012/052332
(87) International publication number: WO 2012/156874

(56) References cited:
- EP-A1- 1 744 572
- CN-A- 101 136 811
- Anonymous: "CPRI Specification V4.2 (2010-09-29) Interface Specification Common Public Radio Interface (CPRI); Interface Specification", CPRI , 29 September 2010 (2010-09-29), XP055018382, Retrieved from the Internet: URL:http://www.cpri.info/spec.html [retrieved on 2012-02-03]
- Anonymous: "Reference Point 3 Specification, Version 4.2", OBSAI - OPEN BASE STATION ARCHITECTURE INITIATIVE , 18 March 2010 (2010-03-18), pages 1-149, XP002682778, Retrieved from the Internet: URL:http://read.pudn.com/downloads76/doc/p roject/283718/OBSAI/OBSAI/RP3_V3.1.pdf [retrieved on 2012-09-18]
- GERALD BRITTON, BYRON KUBERT, JOHN CHAPIN: "RF Over Ethernet for Wireless Infrastructure", SDR FORUM TECHNICAL CONFERENCE 2005, 1 November 2005 (2005-11-01), pages 1-5, XP002682777,

## Description

### BACKGROUND

The present invention relates generally to a distributed base station architecture wherein the radio equipment and radio equipment control are logically and/or physically separated. More particularly, the present invention relates to methods and apparatus for transmitting data from control node to a transmitting node for subsequent transmission over a wireless communication link to a mobile terminal.

One trend in the mobile communication industry is to separate the radio part of a base station from the control part. Separation of the radio part and the control part allows the base station functions to be located in different nodes, which may be at different physical locations or at the same physical location. A consortium of industry leaders, including Ericsson, Huawei, NEC, Nortel Networks, and Siemens, provides an open standard for an interface between a radio equipment control (REC) node and radio equipment (RE) node. This interface is known as the Common Public Radio Interface (CPRI). The CPRI enables equipment from different manufacturers to interoperate. The interoperability provides benefits to both equipment manufacturers and service providers. Interoperability benefits manufacturers by enabling the manufacturers to concentrate on areas of their core competencies. Service providers benefit from a freer marketplace when considering deployment scenarios where the REC node and RE node are separated.

The document EP 1 744 572 A1 describes a technique for transmitting Ethernet packets via a CPRI interface. The document CN 101136811 A describes a technique for processing OFDM transmission signal, wherein a base band unit, BBU, is in use for carrying out data mapping from media access layer to physical layer as well as scrambling baseband data, and coding, interlacing, demodulating channel, then sending them to a radio remote unit, RRU. The RRU includes a post-processing module for baseband data and carries out serial-parallel conversion for baseband data, interpolation, fast reverse Fourier transform, adding circulation prefix, parallel-serial conversion, and outputting.

According to the current CPRI specification, a digital baseband signal is generated at the REC node and transmitted over the CPRI interface to the RE node. The RE node uses the digital baseband signal to modulate a radio frequency carrier.While enabling a distributed base station architecture, the CPRI interface has some disadvantages. The CPRI interface is a TDM based interface. This interface provides ordered delivery of delay sensitive data. In the case of orthogonal frequency division multiplexing (OFDM) systems, such as Long Term Evolution (LTE) system, a modest amount of redundant data, e.g., cyclic prefix, is transmitted over the CPRI interface. Another drawback is the failure of the CPRI standard to take advantage of existing packet-based infrastructures. It would be beneficial to service providers to be able to use existing packet-based infrastructures for transmission of data from the REC node to the RE node.

### SUMMARY

The present invention provides a packet-based interface between a control node and transmitting node in an OFDM system. In embodiments of the present invention, the frequency domain processing is carried out by the control node and the frequency domain data is transmitted over a packet-based interface to the transmitting node. The transmitting node performs conversion of the frequency domain data to time domain data. The time domain data is used to modulate an RF carrier to generate a transmit signal for transmission over a wireless communication link to a mobile terminal.

In one exemplary embodiment, a scrambler at the control node scrambles the frequency domain data and then assembles the scrambled frequency domain data into a plurality of data packets for transmission to the transmitting node. The transmitting node removes the frequency domain data from the data packets and descrambles the frequency domain data. Scrambling the frequency domain data ensures that each data packet carries data for multiple users and thus spreads data loss among many users.

Exemplary embodiments of the invention comprise methods implemented by a control node. One exemplary method comprises mapping modulation symbols to respective resource elements of an OFDM signal to generate an ordered set of frequency domain data, scrambling the frequency domain data to change the order of the frequency domain data and generate scrambled frequency domain data, assembling the scrambled frequency domain data into two or more data packets so that each data packet carries data for multiple users, and transmitting the data packets containing the frequency domain data from the control node to a transmitting node over a packet data network.

Other embodiments of the invention comprise a control node. One exemplary control node comprises a mapper to map modulation symbols to respective resource elements in an OFDM signal to generate an ordered set of frequency domain data, a scrambler to scramble the frequency domain data to change the order of the frequency domain data and to generate scrambled frequency domain data, a packetizer to assemble the scrambled frequency domain data into two or more data packets so that each data packet carries data for multiple users, and an interface for transmitting the data packets from the control node to a transmitting node over a packet data network.

Other embodiments of the invention comprise methods implemented by a transmitting node. One exemplary method comprises receiving scrambled frequency domain data encapsulated in two or more data packets from a control node over a packet data network, wherein each data packet carries data for multiple users, decapsulating the frequency domain data from said data packets, descrambling the scrambled frequency domain data to obtain an ordered set of frequency domain data mapped to respective resource elements in an OFDM signal, converting the descrambled frequency domain data to time domain data, and transmitting the time domain data over a wireless communication link to a receiving node.

Other embodiments of the invention comprise a transmitting node. One exemplary transmitting node comprises a packet interface for receiving data packets containing scrambled frequency domain data from a control node over a packet data network, wherein each data packet carries data for multiple users, a depacketizer to decapsulate the received frequency domain data, a descrambler to descramble the scrambled frequency domain data to obtain an ordered set of modulation symbols mapped to respective resource elements in an OFDM signal, a transform processor to convert the descrambled frequency domain data to a time domain signal, and a transmitter to transmit the time domain signal over the communication network to a receiving node.

Other embodiments of the invention comprise a method implemented by a distributed base station in a mobile communication network. One exemplary method comprises mapping, by a control node, modulation symbols to respective resource elements of an OFDM signal to generate an ordered set of frequency domain data; scrambling, by the control node, the frequency domain data to change the order of the frequency domain data and generate scrambled frequency domain data; transmitting the frequency domain data from the control node to a transmitting node in one or more data packets over a packet data network, wherein each data packet carries data for multiple users; descrambling, by the transmitting node, the scrambled frequency domain data to obtain an ordered set of frequency domain data mapped to respective resource elements in an OFDM signal; converting, by the transmitting node, the descrambled frequency domain data to time domain data; and transmitting, by the transmitting node, the time domain data over a wireless communication link to a receiving node.

Other embodiments of the invention comprise a distributed base station. In one exemplary embodiment, the distributed base station comprises a control node and a transmitting node. The control node comprises a mapper to map modulation symbols to respective resource elements in an OFDM signal to generate an ordered set of frequency domain data, a scrambler to scramble the frequency domain data to change the order of the frequency domain data and generate scrambled frequency domain data, a packet interface for transmitting the frequency domain data from the control node to a transmitting node in one or more data packets over a packet data network, wherein each data packet carries data for multiple users. The transmitting node comprises a packet interface for receiving data packets from a control node over a packet data network, said data packets containing scrambled frequency domain data, a descrambler to descramble the scrambled frequency domain data to obtain an ordered set of modulation symbols mapped to respective resource elements in an OFDM signal, a transform processor to convert the descrambled frequency domain data to a time domain signal; and a transmitter to transmit the time domain signal over the communication network to a receiving node.

Embodiments of the present invention enable efficient transmission of downlink data from the control node to a transmitting node using packet-based infrastructures.

### BRIEF DESCRIPTION OF THE DRAWINGS

Fig. 1 illustrates a distributed base station according to one exemplary embodiment of the present invention.
Fig. 2 illustrates the main functional components of a control node for a distributed base station according to one embodiment of the invention.
Fig. 3 illustrates the main functional components of a transmitting node according to one embodiment of the invention.
Fig. 4 illustrates exemplary processing performed by the control node according to one embodiment of the invention.
Fig. 5 illustrates exemplary processing performed by the transmitting node according to one embodiment of the invention.

### DETAILED DESCRIPTION

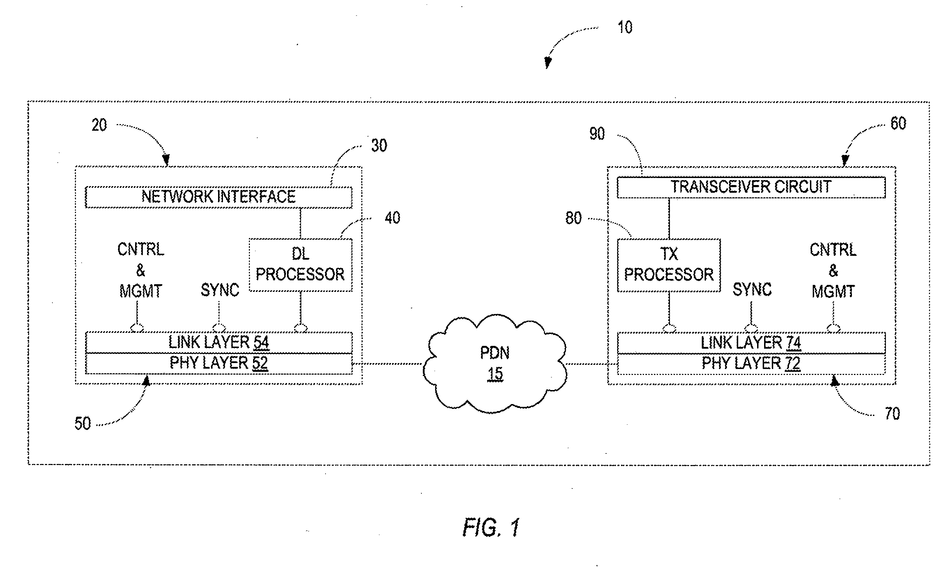

Referring now to the drawings, Fig. 1 illustrates the architecture for a distributed base station 10 according to one embodiment of the invention. The base station 10 comprises a control node 20 and a transmitting node 60, which are logically and/or physically separated. The control node 20 corresponds to the REC node in the CPRI specification and the transmitting node 60 corresponds to the RE node. The control node 20 and a transmitting node 60 may be at different physical locations or at the same physical location. The control node 20 and transmitting node 60 are connected by a packet network 15. The control node 20 generates frequency domain data and transmits the frequency domain data over the packet data network 15 to the transmitting node 60. The transmitting node 60 receives the frequency domain data, converts the frequency domain data to time domain data, and transmits the time domain data over a wireless interface to a mobile terminal.

The main functional components of the control node 20 comprise a network interface 30, a downlink (DL) processor 40, and packet interface 50. The components of the control node 20 may be implemented with one or more processors, hardware, firmware, or a combination thereof. The network interface 30 provides connection to a core network. Downlink data for transmission to one or more mobile terminals is received by the control node 20 over the network interface 30. The downlink processor 40 processes the downlink data to generate frequency domain data and assembles the frequency domain data packets for delivery over the packet data network. The packet interface 50 provides connection to the packet data network 15. The packet interface 50 comprises physical layer 52 and link layer 54 for the transfer of user plane data, control and management information, and synchronization information between the control node 20 and transmitting node 60. The link layer 54 is responsible for multiplexing data on different logical channels and medium access control (MAC) functions. The physical layer 52 provides means for converting data to be transmitted to the transmitting node 60 into a form suitable for transmission over the physical medium. In one exemplary embodiment, the physical layer and medium access control sublayer may implement the Ethernet protocol, which is widely used in IP based networks.

The main functional components of the transmitting node 60 comprise a packet interface 70, transmit processor 80, and wireless transceiver circuit 90. The packet interface 70 provides connection to the packet data network 15 connecting the transmitting node 60 to the control node 20. The packet interface 70 includes a physical layer 72, and link layer 74. The physical layer 72 receives data packets from the physical medium. The link layer 74 demultiplexes the received data packets and performs MAC functions. The transmit processor 80 converts the frequency domain data received from the control node 20 into time domain data. The transceiver circuit 90 transits the time domain data over a wireless link to one or more mobile terminals.

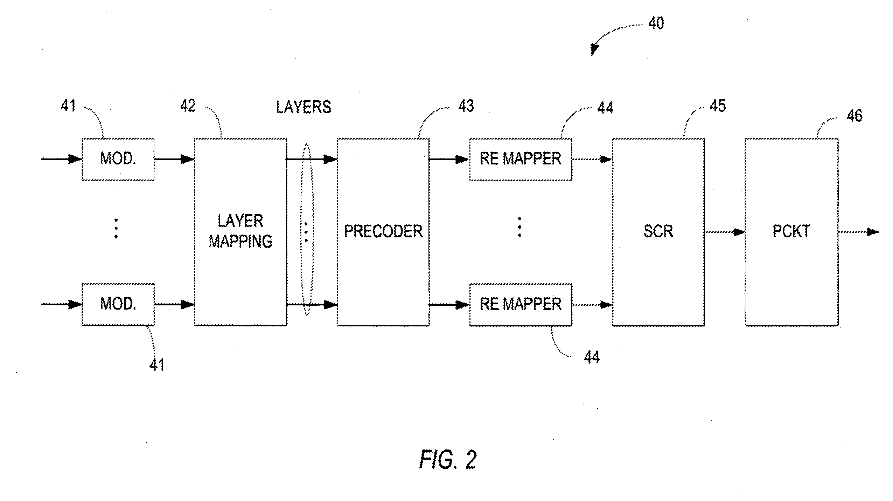

Fig. 2 illustrates in more detail the relevant portion of the downlink processor 40. The downlink processor 40 comprises one or more modulators 41, a layer mapper 42, a precoder 43, one or more resource element mappers 44, a scrambler 45, and packetizer 46. The downlink processor 40 is configured to implement spatial multiplexing in a LTE system. Those skilled in the art will appreciate that other configurations of the downlink processor 40 are possible with fewer components and/or additional components.

Downlink data for transmission to one or more mobile terminals is input to modulators 41. The modulators 41 map the data to modulation symbols in a signal constellation using a quadrature amplitude modulation (QAM) or quadrature phase shift keying (QPSK) scheme. Layer mapper 42 maps the modulation symbols output by the modulators 41 to corresponding layers for spatial multiplexing. Layer mapper 44 outputs data in layers corresponding to the antenna ports at the transmitting node 60. Precoder 43 predistorts the data in each layer to compensate for distortion introduced by the wireless channel between the transmitting node 60 and the mobile terminals. The precoded data streams also correspond to respective antenna ports at the transmitting node 60. Resource element mappers 44 map the precoded data to respective resource elements of an OFDM signal. The output of each resource element mapper 44 comprises an ordered set of frequency domain data. Scrambler 45 scrambles the frequency domain data output from the resource element mappers 44. The scrambling operation changes the order of the frequency domain data. The scrambling is performed at the resolution of resource elements. In one embodiment, the scrambler 45 is configured to maximize the distance between frequency domain data assigned to adjacent resource elements in the OFDM signal. Scrambling ensures that each data packet carries data for multiple users. If a data packet is lost, the data loss is thus spread among many users so that there is minimal degradation in performance. A packetizer 46 assembles the scrambled frequency domain data into a plurality of data packets for transmission to the transmitting node 60 over the packet data network 15.

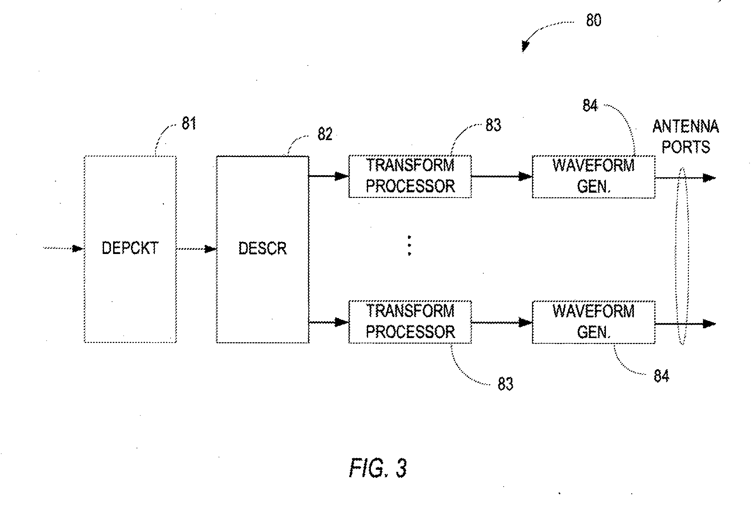

Fig. 3 illustrates the main functional components of the transmit processor 80 at the transmitting node 60 according to one exemplary embodiment. The transmit processor 80 comprises a depacketizer 81, descrambler 82, and one or more transform processors 83. The components of the transmitting node 60 may be implemented with one or more processors, hardware, firmware, or a combination thereof. The depacketizer 81 receives the data packets from the control node 20 over the packet data network 15 and decapsulates the scrambled frequency domain data. The descrambler 82 unscrambles the frequency domain data to restore the frequency domain data to the original order determined by the resource element mappers 44. The unscrambled frequency domain data is fed to corresponding transform processors 83. In one exemplary embodiment, there is one transform processor 83 for each antenna port. The transform processors 83 perform a Fast Fourier Transform or other transform to convert the frequency domain data to time domain data. The time domain data is output to the wireless transceiver circuit 90 for modulating an RF carrier.

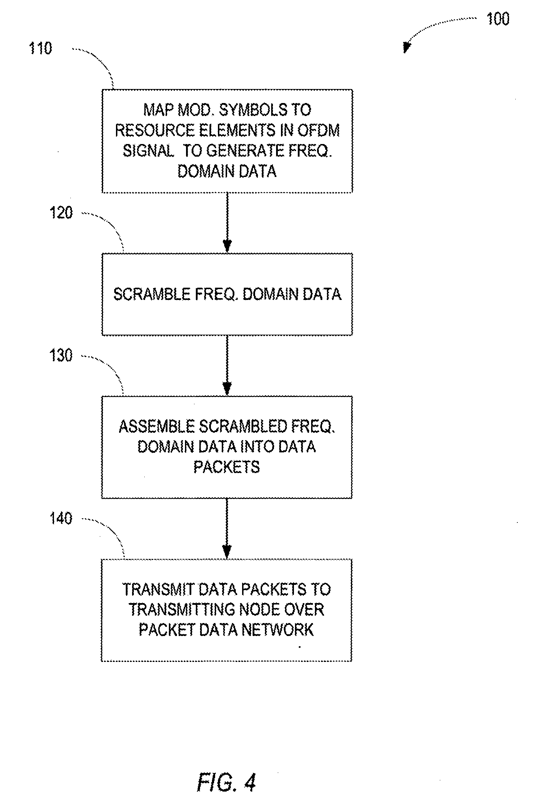

Fig. 4 illustrates an exemplary method 100 according to one embodiment of the invention implemented by the control node 20 shown in Fig. 2. It is presumed that the control node 20 has already received downlink data for transmission to one or more mobile terminals and generated modulation symbols which are to be transmitted. The control node 20 maps the modulation symbols to corresponding resource elements in an OFDM signal to generate frequency domain data (block 110). The modulation symbols may be mapped to resource elements in a single wideband carrier, such as a 5 MHz or 20 MHz LTE carrier. In other embodiments, the modulation symbols may be mapped to multiple carriers. The mapping of modulation symbols to frequency resources results in an ordered set of frequency domain data. The control node 20 scrambles the frequency domain data to spread the frequency domain data assigned to adjacent resource elements (block 120). In one embodiment, the downlink processor 40 is configured to maximize the distance between frequency domain data assigned to adjacent resource elements. In some embodiments of the invention, the frequency domain data can be scrambled across multiple wideband carriers. The control node 20 then assembles the scrambled frequency domain data into two or more data packets (block 130) and transmits the data packets over the packet data network to the transmitting node 60 (block 140). In some embodiments of the invention, the frequency domain data is assembled into two or more Internet Protocol (IP) packets. Ethernet link layer and physical layer protocols may be used for the transmission.

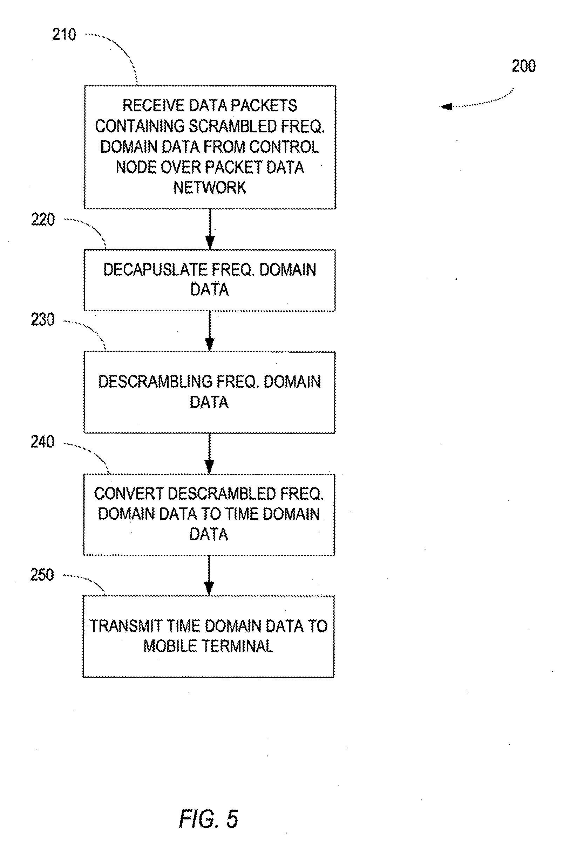

Fig. 5 illustrates an exemplary method 200 implemented by the transmitting node 60. The transmitting node 60 receives the scrambled frequency domain data from the control node 20 over a packet data network in two or more data packets (block 210). In some embodiments, the frequency domain data may be transported in IP packets. The transmitting node 60 decapsulates the frequency domain data (block 220) and descrambles the frequency domain data to restore the original frequency domain order of the data (block 230). The unscrambled data is then converted to time domain data (block 240) and transmitted over a wireless link to one or more mobile terminals (block 250). In one embodiment, the transmitting node 60 performs a Fast Fourier transform to convert the frequency domain data to time domain data. Other types of transforms could also be used.

In the event that data is lost in transit between the control node 20 and transmitting node 60, the transmitting node 60 may generate dummy data symbols to replace the lost data symbols. For example, where the data symbols comprise complex value I/Q symbols, the transmitting node 60 may replace missing data symbols with zero valued I/Q data symbols. Packets may be required to contain an integer number of I/Q symbols to enable this functionality.

The present invention enables the use of a conventional Ethernet interface or other standard interface between the control node 20 and transmitting node 60. The techniques described for transmitting data between the control node 20 and transmitting node 60 is delay tolerant, while distributing the impact of packet loss to multiple users. These techniques will result in only a minor increase per user bit error rate, which will likely be unnoticed for reasonable packet loss rates. The techniques described also require less data to be transmitted from the control node 20 to the transmitting node 60, which helps decrease the packet delay and provides greater effective data transfer rates. The gain in the effective data transfer rate is attributable to less redundant information being transmitted between the control node 20 and the transmitting node 60.

## Claims

1. A method (100) implemented in a control node (20) of a base station (10) in a mobile communication network, the method comprising:
mapping (110) modulation symbols to respective resource elements of an OFDM signal to generate an ordered set of frequency domain data;
scrambling (120) the frequency domain data to change the order of the frequency domain data and generate scrambled frequency domain data;
assembling (130) the scrambled frequency domain data into two or more data packets so that each data packet carries data for multiple users; and
transmitting (140) the data packets containing the frequency domain data from the control node to a transmitting node over a packet data network.

2. The method (100) of claim 1 wherein scrambling (120) the frequency domain data comprises reordering the frequency domain data to spread the frequency domain data assigned to adjacent resource elements, wherein, preferably:
the frequency domain data is assigned to two or more wideband carriers and wherein scrambling (120) the frequency domain data comprises scrambling the frequency domain data across multiple carriers; and/or
wherein the frequency domain data is reordered to maximize distance between frequency domain data assigned to adjacent resource elements of the OFDM signal.

3. A control node (20) in a mobile communication network, the control node (20) comprising:
a mapper (42, 44) to map modulation symbols to respective resource elements in an OFDM signal to generate an ordered set of frequency domain data;
a scrambler (45) to scramble the frequency domain data to change the order of the frequency domain data and to generate scrambled frequency domain data;
a packetizer (46) to assemble the scrambled frequency domain data into two or more data packets so that each data packet carries data for multiple users; and
an interface (50) for transmitting the data packets from the control node (20) to a transmitting node (60) over a packet data network (15).

4. The control node (20) of claim 3 wherein the scrambler (45) is configured to reorder the frequency domain data to spread the frequency domain data assigned to adjacent resource elements of the OFDM signal.

5. The control node (20) of claim 4 wherein the frequency domain data is assigned to two or more wideband carriers and wherein the scrambler (45) is configured to scramble the frequency domain data across multiple carriers and/or wherein the scrambler (45) is configured to reorder the frequency domain data to maximize distance between frequency domain data assigned to adjacent resource elements.

6. A method (200) implemented by a transmitting node (60) in a mobile communication network, the method (200) comprising:
receiving (210), from a control node over a packet data network, scrambled frequency domain data encapsulated in two or more data packets, wherein each data packet carries data for multiple users;
decapsulating (220) the frequency domain data from said data packets;
descrambling (230) the scrambled frequency domain data to obtain an ordered set of frequency domain data mapped to respective resource elements in an OFDM signal;
converting (240) the descrambled frequency domain data to time domain data; and
transmitting (250) the time domain data over a wireless communication link to a receiving node.

7. The method (200) of claim 6 wherein descrambling (230) the scrambled frequency domain data comprises reordering the frequency domain data according to the mapping between the modulation symbols and corresponding resource elements, wherein, preferably, the frequency domain data is scrambled across multiple carriers and wherein descrambling (230) the frequency domain data comprises reordering the frequency domain data according to the mapping between the modulation symbols and corresponding resource elements on two or more carriers, and/or wherein converting (240) the descrambled frequency domain data to time domain data comprises applying a Fourier transform to the descrambled frequency domain data to obtain the time domain data.

8. A transmitting node (60) in a communication network, the transmitting node (60) comprising:
a packet interface (70) for receiving data packets from a control node (20) over a packet data network (15), said data packets containing scrambled frequency domain data wherein each data packet carries data for multiple users;
a depacketizer (81) to decapsulate the received frequency domain data;
a descrambler (82) to descramble the scrambled frequency domain data to obtain an ordered set of modulation symbols mapped to respective resource elements in an OFDM signal;
a transform processor (83) to convert the descrambled frequency domain data to a time domain signal; and
a transmitter (90) to transmit the time domain signal over the communication network to a receiving node.

9. The transmitting node (60) of claim 8 wherein the descrambler (82) is configured to reorder the frequency domain data according to the mapping between the modulation symbols and corresponding resource elements, wherein, preferably, the frequency domain data is scrambled across multiple carriers and wherein the descrambler (82) is configured to reorder the frequency domain data according to the mapping between the modulation symbols and corresponding resource elements on two or more carriers.

10. The transmitting node (60) of claim 8 or claim 9 wherein the transform processor (83) is configured to apply a Fourier transform to the descrambled frequency domain data to generate the time domain data.

11. A method implemented by a distributed base station in a mobile communication network, the method comprising:
mapping (110), by a control node, modulation symbols to respective resource elements of an OFDM signal to generate an ordered set of frequency domain data;
scrambling (120), by the control node, the frequency domain data to change the order of the frequency domain data and generate scrambled frequency domain data;
transmitting (140) the frequency domain data from the control node to a transmitting node in one or more data packets over a packet data network, wherein each data packet carries data for multiple users;
descrambling (230), by the transmitting node, the scrambled frequency domain data to obtain an ordered set of frequency domain data mapped to respective resource elements in an OFDM signal;
converting (240), by the transmitting node, the descrambled frequency domain data to time domain data; and
transmitting (250), by the transmitting node, the time domain data over a wireless communication link to a receiving node.

12. The method of claim 11 wherein scrambling (120) the frequency domain data comprises reordering the frequency domain data to spread the frequency domain data assigned to adjacent resource elements, and wherein descrambling (230) the scrambled frequency domain data comprises reordering the frequency domain data according to the mapping between the modulation symbols and corresponding resource elements, wherein, preferably, the frequency domain data is assigned to two or more wideband carriers and wherein the scrambling (120) and descrambling (230) of the frequency domain data is performed across multiple carriers and/or wherein the scrambled frequency domain data is reordered to maximize distance between frequency domain data assigned to adjacent resource elements of the OFDM signal.

13. A base station (10) in a mobile communication network, the base station (10) comprising:
a control node (20) including:
a mapper (42, 44) to map modulation symbols to respective resource elements in an OFDM signal to generate an ordered set of frequency domain data;
a scrambler (45) to scramble the frequency domain data to change the order of the frequency domain data and generate scrambled frequency domain data;
a packet interface (50) for transmitting the frequency domain data from the control node (20) to a transmitting node (60) in one or more data packets over a packet data network (15) wherein each data packet carries data for multiple users; and
a transmitting node (60) including:
a packet interface (70) for receiving data packets from a control node (20) over a packet data network (15), said data packets containing scrambled frequency domain data;
a descrambler (82) to descramble the scrambled frequency domain data to obtain an ordered set of modulation symbols mapped to respective resource elements in an OFDM signal;
a transform processor (83) to convert the descrambled frequency domain data to a time domain signal; and
a transmitter (90) to transmit the time domain signal over the communication network to a receiving node.

14. The base station (10) of claim 13 wherein the scrambler (45) is configured to reorder the frequency domain data to spread the frequency domain data assigned to adjacent resource elements of the OFDM signal, and wherein the descrambler (82) is configured to reorder the frequency domain data according to the mapping between the modulation symbols and corresponding resource elements.

15. The base station (10) of claim 14 wherein the frequency domain data is assigned to two or more wideband carriers and wherein the scrambler (45) and descrambler (82) are configured to perform scrambling and descrambling operations across multiple carriers and/or wherein the scrambler (45) is configured to reorder the frequency domain data to maximize distance between frequency domain data assigned to adjacent resource elements.

## Patentansprüche

1. Verfahren (100), umgesetzt in einem Steuerungsknoten (20) einer Basisstation (10) in einem mobilen Kommunikationsnetzwerk, wobei das Verfahren umfasst:
Zuordnen (110) von Modulationssymbolen zu entsprechenden Ressourcenelementen eines OFDM-Signals, um einen geordneten Satz von Frequenzraumdaten zu erzeugen;
Scrambeln (120) der Frequenzraumdaten, um die Ordnung der Frequenzraumdaten zu ändern und gescrambelte Frequenzraumdaten zu erzeugen;
Zusammenfügen (130) der gescrambelten Frequenzraumdaten in zwei oder mehr Datenpakete, so dass jedes Datenpaket Daten für mehrere Benutzer trägt; und
Senden (140) der Datenpakete, die die Frequenzraumdaten enthalten, von dem Steuerungsknoten zu einem Sendeknoten über ein Paketdatennetzwerk.

2. Verfahren (100) nach Anspruch 1, wobei das Scrambeln (120) der Frequenzraumdaten ein Umordnen der Frequenzraumdaten umfasst, um die Frequenzraumdaten, die benachbarten Ressourcenelementen zugewiesen sind, zu verteilen, wobei vorzugsweise:
die Frequenzraumdaten zwei oder mehr Weitbandträgern zugewiesen sind und wobei das Scrambeln (120) der Frequenzraumdaten ein Scrambeln der Frequenzraumdaten über mehrere Träger hinweg umfasst; und/oder
wobei die Frequenzraumdaten umgeordnet werden, um einen Abstand zwischen Frequenzraumdaten, die benachbarten Ressourcenelementen des OFDM-Signals zugewiesen sind, zu maximieren.

3. Steuerungsknoten (20) in einem mobilen Kommunikationsnetzwerk, wobei der Steuerungsknoten (20) umfasst:
einen Zuordner (42, 44) zum Zuordnen von Modulationssymbolen zu jeweiligen Ressourcenelementen in einem OFDM-Signal, um einen geordneten Satz von Frequenzraumdaten zu erzeugen;
einen Scrambler (45) zum Scrambeln der Frequenzraumdaten, um die Ordnung der Frequenzraumdaten zu ändern und um gescrambelte Frequenzraumdaten zu erzeugen;
einen Paketierer (46) zum Zusammenfügen der gescrambelten Frequenzraumdaten in zwei oder mehr Datenpakete, so dass jedes Datenpaket Daten für mehrere Benutzer trägt, und
eine Schnittstelle (50) zum Senden der Datenpakete von dem Steuerungsknoten (20) zu einem Sendeknoten (60) über ein Paketdatennetzwerk (15).

4. Steuerungsknoten (20) nach Anspruch 3, wobei der Scrambler (45) dazu ausgebildet ist, die Frequenzraumdaten umzuordnen, um die Frequenzraumdaten, die benachbarten Ressourcenelementen des OFDM-Signals zugewiesen sind, zu verteilen.

5. Steuerungsknoten (20) nach Anspruch 4, wobei die Frequenzraumdaten zwei oder mehr Weitbandträgern zugewiesen sind und wobei der Scrambler (45) dazu ausgebildet ist, die Frequenzraumdaten über mehrere Träger hinweg zu scrambeln, und/oder wobei der Scrambler (45) dazu ausgebildet ist, die Frequenzraumdaten umzuordnen, um einen Abstand zwischen Frequenzraumdaten, die benachbarten Ressourcenelementen zugewiesen sind, zu maximieren.

6. Verfahren (200), umgesetzt mittels eines Sendeknotens (60) in einem mobilen Kommunikationsnetzwerk, wobei das Verfahren (200) umfasst:
Empfangen (210), von einem Steuerungsknoten über ein Paketdatennetzwerk, gescrambelter Frequenzraumdaten, die in zwei oder mehr Datenpakete gekapselt sind, wobei jedes Datenpaket Daten für mehrere Benutzer trägt;
Entkapseln (220) der Frequenzraumdaten aus den Datenpaketen;
Entscrambeln (230) der gescrambelten Frequenzraumdaten, um einen geordneten Satz von Frequenzraumdaten zu erhalten, die jeweiligen Ressourcenelementen in einem OFDM-Signal zugeordnet sind;
Umwandeln (240) der entscrambelten Frequenzraumdaten in Zeitraumdaten, und
Senden (250) der Zeitraumdaten über einen drahtlosen Kommunikationslink zu einem Empfangsknoten.

7. Verfahren (200) nach Anspruch 6, wobei das Entscrambeln (230) der gescrambelten Frequenzraumdaten ein Umordnen der Frequenzraumdaten gemäß der Zuordnung zwischen den Modulationssymbolen und entsprechenden Ressourcenelementen umfasst, wobei vorzugsweise die Frequenzraumdaten über mehrere Träger hinweg gescrambelt werden und wobei das Entscrambeln (230) der Frequenzraumdaten ein Umordnen der Frequenzraumdaten gemäß der Zuordnung zwischen den Modulationssymbolen und entsprechenden Ressourcenelementen auf zwei oder mehr Trägern umfasst, und/oder wobei das Umwandeln (240) der entscrambelten Frequenzraumdaten in Zeitraumdaten ein Anwenden einer Fourier-Transformation auf die entscrambelten Frequenzraumdaten umfasst, um die Zeitraumdaten zu erhalten.

8. Sendeknoten (60) in einem Kommunikationsnetzwerk, wobei der Sendeknoten (60) umfasst:
eine Paketschnittstelle (70) zum Empfangen von Datenpaketen von einem Steuerungsknoten (20) über ein Paketdatennetzwerk (15), wobei die Datenpakete gescrambelte Frequenzraumdaten enthalten, wobei jedes Datenpaket Daten für mehrere Benutzer trägt;
einen Entpaketierer (81), um die empfangenen Frequenzraumdaten zu entkapseln;
einen Entscrambler (82), um die gescrambelten Frequenzraumdaten zu entscrambeln, um einen geordneten Satz von Modulationssymbolen zu erhalten, die jeweiligen Ressourcenelementen in einem OFDM-Signal zugeordnet sind;
einen Transformationsprozessor (83), um die entscrambelten Frequenzraumdaten in ein Zeitraumsignal umzuwandeln; und
einen Sender (90) um das Zeitraumsignal über das Kommunikationsnetzwerk zu einem Empfangsknoten zu senden.

9. Sendeknoten (60) nach Anspruch 8, wobei der Entscrambler (82) dazu ausgebildet ist, die Frequenzraumdaten gemäß der Zuordnung zwischen den Modulationssymbolen und entsprechenden Ressourcenelementen umzuordnen, wobei vorzugsweise die Frequenzraumdaten über mehrere Träger hinweg gescrambelt sind und wobei der Entscrambler (82) dazu ausgebildet ist, die Frequenzraumdaten gemäß der Zuordnung zwischen den Modulationssymbolen und entsprechenden Ressourcenelementen auf zwei oder mehr Trägern umzuordnen.

10. Sendeknoten (60) nach Anspruch 8 oder Anspruch 9, wobei der Transformationsprozessor (83) dazu ausgebildet ist, eine Fourier-Transformation auf die entscrambelten Frequenzraumdaten anzuwenden, um die Zeitraumdaten zu erzeugen.

11. Verfahren, umgesetzt mittels einer verteilten Basisstation in einem mobilen Kommunikationsnetzwerk, wobei das Verfahren umfasst:
Zuordnen (110), mittels eines Steuerungsknotens, von Modulationssymbolen zu jeweiligen Ressourcenelementen eines OFDM-Signals, um einen geordneten Satz von Frequenzraumdaten zu erzeugen;
Scrambeln (120), mittels des Steuerungsknotens, der Frequenzraumdaten, um die Ordnung der Frequenzraumdaten zu ändern und gescrambelte Frequenzraumdaten zu erzeugen;
Senden (140) der Frequenzraumdaten von dem Steuerungsknoten zu einem Sendeknoten in einem oder mehr Datenpaketen über ein Paketdatennetzwerk, wobei jedes Datenpaket Daten für mehrere Benutzer trägt;
Entscrambeln (230), mittels des Sendeknotens, der gescrambelten Frequenzraumdaten, um einen geordneten Satz von Frequenzraumdaten zu erhalten, die jeweiligen Ressourcenelementen in einem OFDM-Signal zugeordnet sind;
Umwandeln (240), mittels des Sendeknotens, der entscrambelten Frequenzraumdaten in Zeitraumdaten, und
Senden (250), mittels des Sendeknotens, der Zeitraumdaten über einen drahtlosen Kommunikationslink zu einem Empfangsknoten.

12. Verfahren nach Anspruch 11, wobei das Scrambeln (120) der Frequenzraumdaten ein Umordnen der Frequenzraumdaten umfasst, um die Frequenzraumdaten, die benachbarten Ressourcenelementen zugewiesen sind, zu verteilen, und wobei das Entscrambeln (230) der gescrambelten Frequenzraumdaten ein Umordnen der Frequenzraumdaten gemäß der Zuordnung zwischen den Modulationssymbolen und entsprechenden Ressourcenelementen umfasst, wobei vorzugsweise die Frequenzraumdaten zwei oder mehr Weitbandträgern zugewiesen sind und wobei das Scrambeln (120) und Entscrambeln (230) der Frequenzraumdaten über mehrere Träger hinweg durchgeführt wird und/oder wobei die gescrambelten Frequenzraumdaten umgeordnet werden, um einen Abstand zwischen den Frequenzraumdaten, die benachbarten Ressourcenelementen des OFDM-Signals zugewiesen sind, zu maximieren.

13. Basisstation (10) in einem mobilen Kommunikationsnetzwerk, wobei die Basisstation (10) umfasst:
einen Steuerungsknoten (20) enthaltend:
einen Zuordner (42, 44), um Modulationssymbole zu jeweiligen Ressourcenelementen in einem OFDM-Signal zuzuordnen, um einem geordneten Satz von Frequenzraumdaten zu erzeugen;
einen Scrambler (45), um die Frequenzraumdaten zu scrambeln, um die Ordnung der Frequenzraumdaten zu ändern und gescrambelte Frequenzraumdaten zu erzeugen;
eine Paketschnittstelle (50) zum Senden der Frequenzraumdaten von dem Steuerungsknoten (20) zu einem Sendeknoten (60) in einem oder mehr Datenpaketen über ein Paketdatennetzwerk (15), wobei jedes Datenpaket Daten für mehrere Benutzer trägt; und
einen Sendeknoten (60) enthaltend:
eine Paketschnittstelle (70) zum Empfangen von Datenpaketen von einem Steuerungsknoten (20) über ein Paketdatennetzwerk (15), wobei die Datenpakete gescrambelte Frequenzraumdaten enthalten;
einen Entscrambler (82), um die gescrambelten Frequenzraumdaten zu entscrambeln, um einen geordneten Satz von Modulationssymbolen zu erhalten, die jeweiligen Ressourcenelementen in einem OFDM-Signal zugeordnet sind;
einen Transformationsprozessor (83), um die entscrambelten Frequenzraumdaten in ein Zeitraumsignal umzuwandeln; und
einen Sender (90), um das Zeitraumsignal über das Kommunikationsnetzwerk zu einem Empfangsknoten zu senden.

14. Basisstation (10) nach Anspruch 13, wobei der Scrambler (45) dazu ausgebildet ist, die Frequenzraumdaten umzuordnen, um die Frequenzraumdaten, die benachbarten Ressourcenelementen des OFDM-Signals zugewiesen sind, zu verteilen, und wobei der Entscrambler (82) dazu ausgebildet ist, die Frequenzraumdaten gemäß der Zuordnung zwischen den Modulationssymbolen und entsprechenden Ressourcenelementen umzuordnen.

15. Basisstation (10) nach Anspruch 14, wobei die Frequenzraumdaten zwei oder mehr Weitbandträgern zugewiesen sind und wobei der Scrambler (45) und der Entscrambler (82) dazu ausgebildet sind, Scrambel- und Entscrambelprozesse über mehrere Träger hinweg durchzuführen und/oder wobei der Scrambler (45) dazu ausgebildet ist, die Frequenzraumdaten umzuordnen, um einen Abstand zwischen Frequenzraumdaten, die benachbarten Ressourcenelementen zugewiesen sind, zu maximieren.

## Revendications

1. Procédé (100) implémenté dans un noeud de contrôle (20) d'une station de base (10) dans un réseau de communication mobile, le procédé comprenant de :
mettre en correspondance (110) des symboles de modulation avec des éléments de ressources respectifs d'un signal OFDM afin de générer un ensemble ordonné de données de domaine de fréquence ;
mélanger (120) les données de domaine de fréquence pour changer l'ordre des données de domaine de fréquence et générer des données de domaine de fréquences mélangées ;
mélanger (130) les données de domaine de fréquences mélangées en deux ou plusieurs paquets de données de sorte que chaque paquet de données transporte des données pour des utilisateurs multiples ; et
transmettre (140) les paquets de données contenant les données de domaine de fréquence du noeud de contrôle à un noeud de transmission via un réseau de paquets de données.

2. Procédé (100) selon la revendication 1, dans lequel le mélange (120) des données de domaine de fréquence comprend de réordonner les données de domaine de fréquence afin d'étaler les données de domaine de fréquences assignées aux éléments de ressources adjacentes, dans lequel de préférence :
les données de domaine de fréquence sont assignées à deux ou plus porteuses large bande et dans lequel l'embrouillage (120) des données de domaine de fréquence comprend le mélange des données de domaine de fréquence à travers des porteuses multiples ; et/ou
dans lequel les données de domaine de fréquence sont réordonnées afin de maximiser la distance entre les données de domaine de fréquence assignées aux éléments de ressources adjacents du signal OFDM.

3. Noeud de contrôle (20) dans un réseau de communication mobile, le noeud de contrôle (20) comprenant :
un dispositif de mise en correspondance (42,44) pour mettre en correspondance des symboles de modulation avec les éléments de ressources respectives dans un signal OFDM afin de générer un ensemble ordonné de données de domaine de fréquence ;
un mélangeur (45) pour mélanger les données de domaine de fréquence afin de changer l'ordre des données de domaine de fréquences et générer des données de domaine de fréquences mélangées ;
un paquétiseur (46) pour assembler les données de domaine de fréquences mélangées en deux ou plusieurs paquets de données de sorte que chaque paquet de données transporte des données pour des utilisateurs multiples ; et
une interface (50) pour transmettre les paquets de données du noeud de contrôle (20) à un noeud de transmission (60) via un réseau de paquets de données (15).

4. Noeud de contrôle (20) selon la revendication 3, dans lequel le mélangeur (45) est configuré pour réordonner les données de domaine de fréquence afin d'étaler les données de domaines de fréquences assignées aux éléments de ressources adjacents du signal OFDM.

5. Noeud de contrôle (20) selon la revendication 4, dans lequel les données de domaine de fréquence sont assignées à deux ou plus porteuses larges bande et dans lequel le mélangeur (45) est configuré pour mélanger les données de domaine de fréquence à travers les porteuses multiples et/ou dans lequel le mélangeur (45) est configuré pour réordonner les données de domaine de fréquence afin de maximiser une distance entre les données de domaine de fréquence assignées aux éléments de ressources adjacents.

6. Procédé (200) implémenté par un noeud de transmission (60) dans un réseau de communication mobile, le procédé (200) comprenant de :
recevoir (210) depuis un noeud de contrôle via un réseau de paquets de données, des données de domaine de fréquences mélangées encapsulées dans deux ou
plusieurs paquets de données, dans lequel chaque paquet de données transporte des données pour des utilisateurs multiples ;
décapsuler (220) les données de domaine de fréquence provenant desdits paquets de données ;
dé-mélanger (230) les données de domaine de fréquences embrouillées pour obtenir un ensemble ordonné de données de domaine de fréquences mises en correspondance avec des éléments de ressources respectifs dans un signal OFDM ;
convertir (240) les données de domaine de fréquence dé-mélangées en données de domaine temporel ; et
transmettre (250) les données de domaine temporel via une liaison de communication sans fil à un noeud de réception.

7. Procédé (200) selon la revendication 6, dans lequel démélanger (230) les données de domaine de fréquences mélangées comprend de réordonner les données de domaine de fréquence selon la mise en correspondance entre les symboles de modulation et les éléments de ressources correspondants, dans lequel de préférence les données de domaine de fréquence sont mélangées à travers des porteuses multiples et dans lequel dé-mélanger (230) les données de domaine de fréquence comprend de réordonner les données de domaine de fréquence selon la mise en correspondance entre les symboles de modulation et les événements de ressources correspondant sur deux ou plusieurs porteuses et/ou dans lequel convertir (240) les données de domaine de fréquence désembrouillées en données de domaine temporel comprend d'appliquer une transformée de Fourier aux données de domaine de fréquence dé-mélangées pour obtenir les données de domaine temporel.

8. Noeud de transmission (60) dans un réseau de communication, le noeud de transmission (60) comprenant
une interface de paquets (70) pour recevoir depuis un noeud de contrôle (20) via un réseau de paquets de données (15), lesdits paquets de données contenant des données de domaine de fréquences mélangées dans lequel chaque paquet de données transporte des données pour des utilisateurs multiples ;
un dépaquétiseur (81) pour décapsuler les données de domaine de fréquence reçues;
un dé-mélangeur (82) pour dé-mélanger les données de domaine de fréquences mélangées pour obtenir un ensemble ordonné de données de domaine de fréquences mises en correspondance avec des éléments de ressources respectifs dans un signal OFDM ;
un processeur de transformée (83) pour convertir les données de domaine de fréquence dé- mélangées en un signal de domaine temporel ; et
un émetteur (90) pour transmettre le signal de domaine temporel via le réseau de communication à un noeud de réception.

9. Noeud de transmission (60) selon la revendication 8, dans lequel le dé-mélangeur (82) est configuré pour réordonner les données de domaine de fréquence selon la mise en correspondance entre les symboles de modulation et des éléments de ressources correspondants, dans lequel de préférence les données de domaine de fréquence sont mélangées à travers des porteuses multiples et dans lequel le dé-mélangeur (82) est configuré pour réordonner les données de domaine de fréquence selon la mise en correspondance entre les symboles de modulation et les éléments de ressources correspondants sur deux ou plusieurs porteuses.

10. Noeud de transmission (60) selon la revendication 8 ou 9, dans lequel le processeur de transformée (83) est configuré pour appliquer une transformée de Fourier aux données de domaine de fréquence désembrouillées pour obtenir les données de domaine temporel.

11. Procédé implémenté par une station de base distribuée dans un réseau de communication mobile, le procédé comprenant de :
mettre en correspondance (110) des symboles de modulation avec des éléments de ressources respectifs d'un signal OFDM afin de générer un ensemble ordonné de données de domaine de fréquence ;
mélanger (120) les données de domaine de fréquence pour changer l'ordre des données de domaine de fréquence et générer des données de domaine de fréquences mélangées ;
transmettre (140) les paquets de données contenant les données de domaine de fréquence du noeud de contrôle à un noeud de transmission dans un ou plusieurs paquets de données via un réseau de données multiples, dans lequel chaque paquet de données transporte des données pour des utilisateurs multiples ;
dé-mélanger (230) par le noeud de transmission les données de domaine de fréquences mélangées pour obtenir un ensemble ordonné de données de domaine de fréquence mises en correspondance avec des éléments de ressources respectifs dans un signal OFDM ;
convertir (240) dans le noeud de transmission les données de domaine de fréquence dé- mélangées en données de domaine temporel ; et
transmettre (250) par le noeud de transmission les données de domaine temporel via une liaison de communication sans fil à un noeud de réception.

12. Procédé selon la revendication 11, dans lequel mélanger (120) les données de domaine de fréquence comprend de réordonner les données de domaine de fréquence afin d'étaler les données de domaine de fréquences assignées aux éléments de ressources adjacents et dans lequel dé-mélanger (230) les données de domaine de fréquences embrouillées comprend de réordonner les données de domaine de fréquence selon la mise en correspondance entre les symboles de modulation et les éléments de ressources correspondants, dans lequel de préférence les données de domaine de fréquences sont assignées à deux ou plus porteuses large bande et dans lequel le mélange (120) et le dé-mélange (230) des données de domaine de fréquence sont effectué à travers des porteuses multiples et/ou dans lequel les données de domaine de fréquences mélangées sont réordonnées pour maximiser une distance entre les données de domaine de fréquences assignées à des éléments de ressources adjacents du signal OFDM.

13. Station de base (10) dans un réseau de communication mobile, la station de base (10) comprenant :
un noeud de contrôle (20) incluant :
un dispositif de mise en correspondance (42,44) pour mettre en correspondance des symboles de modulation avec les éléments de ressources respectives dans un signal OFDM afin de générer un ensemble ordonné de données de domaine de fréquence ;
un mélangeur (45) pour mélanger les données de domaine de fréquence afin de changer l'ordre des données de domaine de fréquences et générer des données de domaine de fréquences mélangées ;
une interface de paquets (50) pour transmettre les données de domaine de fréquences du noeud de contrôle (20) à un noeud de transmission (60) dans un ou plusieurs paquets de données via un réseau de paquets de données (15), dans lequel chaque paquet de données transporte des données pour des utilisateurs multiples ; et
un noeud de transmission (60) incluant :
une interface de paquets (70) pour recevoir depuis un noeud de contrôle (20) via un réseau de paquets de données (15), lesdits paquets de données contenant des données de domaine de fréquences mélangées ;
un dé-mélangeur (82) pour dé-mélanger les données de domaine de fréquence mélangées pour obtenir un ensemble ordonné de symboles de modulation mis en correspondance avec des éléments de ressource respectifs dans un signal OFDM ;
un processeur de transformée (83) pour convertir les données de domaine de fréquence démélangées en un signal de domaine temporel ; et
un émetteur (90) pour transmettre le signal de domaine temporel via le réseau de communication à un noeud de réception.

14. Station de base (10) selon la revendication 13, dans lequel le mélangeur (45) est configuré pour réordonner les données de domaine de fréquence afin d'étaler les données de domaine de fréquences assignées aux éléments de ressources adjacents du signal OFDM et dans lequel le dé-mélangeur (82) est configuré pour réordonner les données de domaine de fréquence selon la mise en correspondance entre les symboles de modulation et les éléments de ressource correspondants.

15. Station de base (10) selon la revendication 14, dans lequel les données de domaine de fréquence sont assignées à deux porteuses ou plus à large bande et dans lequel le mélangeur (45) et le dé-mélangeur (82) sont configurées pour effectuer des opérations de mélange et dé-mélange à travers les porteuses multiples et/ou dans lequel le mélangeur (45) est configuré pour réordonner les données de domaine de fréquence afin de maximiser une distance entre les données de domaine de fréquences assignées aux éléments de ressources adjacents.
